# EUROPÄISCHE PATENTSCHRIFT

(11) **EP 3 390 795 B1**
(45) Veröffentlichungstag und Bekanntmachung des Hinweises auf die Patenterteilung: **25.03.2020**
(21) Anmeldenummer: 16810373.7
(22) Anmeldetag: 14.12.2016
(51) Int. Cl.: F16C 7/04, F16C 7/06, F02B 75/04

(54) **HUBKOLBENMASCHINE MIT EINER LÄNGENVERSTELLBAREN PLEUELSTANGE UND EINEM INDUKTIV BETÄTIGBAREN STEUERVENTIL**
RECIPROCATING-PISTON MACHINE COMPRISING A LENGTH-ADJUSTABLE CONNECTING ROD AND AN INDUCTIVELY ACTUATABLE CONTROL VALVE
MOTEUR À PISTONS ALTERNATIFS DOTÉ D'UNE BIELLE DE LONGUEUR RÉGLABLE ET D'UNE SOUPAPE DE COMMANDE POUVANT ÊTRE ACTIONNÉE PAR INDUCTION

(30) Priorität: 14.12.2015 AT 510622015; 29.04.2016 AT 503902016
(43) Veröffentlichungstag der Anmeldung: 24.10.2018
(73) Patentinhaber: AVL List GmbH, 8020 Graz (AT)
(72) Erfinder: THEISSL, Mario, 8541 Schwanberg (AT)
(74) Vertreter: Breuer Friedrich Hahner Patentanwälte PartG mbB
(86) Internationale Anmeldenummer: PCT/EP2016/080940
(87) Internationale Veröffentlichungsnummer: WO 2017/102815

(56) Entgegenhaltungen:
- EP-A1- 0 438 121
- WO-A1-2014/019684
- DE-A1-102013 111 617
- US-A- 2 989 954

## Beschreibung

Die Erfindung betrifft eine Hubkolbenmaschine, insbesondere Brennkraftmaschine, mit zumindest einer mit einem Kurbelzapfen einer Kurbelwelle verbundenen, längenverstellbaren Pleuelstange, wobei die Pleuelstange zumindest eine Längenverstelleinrichtung und zumindest ein elektrisch schaltbares und induktiv betätigbares Steuerventil aufweist.

Um Brennkraftmaschinen hinsichtlich Emissionen und Verbrauch zu optimieren werden zunehmend Varianten mit veränderbarem Verdichtungsverhältnis untersucht. Durch Ändern der Verdichtung einer Brennkraftmaschine kann Volllast mit geringerem Verdichtungsverhältnis, Teillast und Starten mit erhöhtem Verhältnis gefahren werden. Dabei wird im Teillastbereich der Verbrauch verbessert, beim Start der Kompressionsdruck mit dem erhöhtem Verdichtungsverhältnis gesteigert und bei hoher Leistung der Spitzendruck mit verringertem Verhältnis reduziert, sowie Klopfen verhindert.

Hierzu sind verschiedene Lösungen bekannt, die insbesondere das Problem des Steuerns des Verdichtungsverhältnisses auf unterschiedliche Arten lösen. In der DE 10 2007 040 699 A1 ist in einem Zylinder ein Hubkolben mit einem Aktor versehen, der aus einem magnetostriktiven Material besteht und zwischen Kolbenbolzen und -boden angeordnet ist. Durch eine außerhalb des Zylinders angeordnete Einrichtung zur Erzeugung eines veränderlichen magnetischen Feldes wird eine Längenveränderung des Aktors umgesetzt. Nachteilig daran ist insbesondere, dass das magnetostriktive Material verschleißanfällig ist und ein reproduzierbares Verhalten über einen längeren Zeitraum nicht sichergestellt ist.

Aus der AT 514 071 B1 der Anmelderin ist eine Lösung mit einer längenverstellbaren Pleuelstange bekannt, wo eine Längenverstellung über das selektive Befüllen von Hochdruckräumen realisiert wird. Das selektive Befüllen erfolgt dabei über ein in der Pleuelstange angeordnetes Steuerventil. In einer Ausführungsvariante weist dabei das Steuerventil einen Stellkolben auf, welcher elektromagnetisch durch eine im Kurbelgehäuse angeordnete Induktionsspule betätigbar ist. Die DE 102 30 427 A1 beschreibt eine ähnliche Lösung. Dabei kann es über längere Betriebszeiten zu Schwierigkeiten bei der induktiven Energieübertragung kommen, beispielsweise durch Verschmutzung in der Übertragungsstrecke oder ähnliches. Darüber hinaus sind die bekannten Lösungen platz- und fertigungsaufwändig.

Es ist daher eine Aufgabe der Erfindung, diese Nachteile des Standes der Technik zu vermeiden und auf möglichst einfache und platzsparende und zuverlässige Weise eine flexible Veränderung des Verdichtungsverhältnisses zu ermöglichen.

Erfindungsgemäß wird dies dadurch erreicht, dass die Pleuelstange zumindest eine Induktionseinrichtung aufweist, die in einer in der Pleuelstange ausgeführten, von zumindest einer Stirnseite der Pleuelstange ausgehenden und von einer Längsachse des Kurbelzapfens in einem Kurbelzapfenabstand entfernt angeordneten Position, vorzugsweise in einer Ausnehmung, im Bereich eines großen Pleuelauges der Pleuelstange angeordnet ist, wobei die Induktionseinrichtung mit dem Steuerventil elektrisch verbindbar oder verbunden ist und in der Induktionseinrichtung bei einer Drehbewegung der Kurbelwelle mittels zumindest einer kurbelwellenfesten Anregevorrichtung ein elektrischer Strom induzierbar ist. Dadurch ist bei induktiver Betätigung des Steuerventils, beispielsweise durch eine im Kurbelgehäuse angeordneten Steuereinheit, eine rasche und einfache Umschaltung des Verdichtungsverhältnisses der Brennkraftmaschine möglich, die dauerhaft und sehr verschleißarm betrieben werden kann. Insbesondere erlaubt die Erfindung eine betriebspunktunabhängige aktive Umschaltung des Verdichtungsverhältnisses, was die Umsetzung von Emissions- und Verbrauchsvorteile ermöglicht.

Unter Induktionseinrichtung wird hier ein Element verstanden, in welchem bei Drehung der Kurbelwelle Spannung induziert wird. Die Anregevorrichtung ist ein Element, welches eine Änderung des magnetischen Flusses hervorruft und somit die Entstehung eines elektrischen Feldes in der Induktionseinrichtung bewirkt.

Induktionseinrichtung und Anregevorrichtung sind so angeordnet, dass zwischen ihnen ein geringer definierter Luftspalt in axialer Richtung - also in einer Richtung entlang der Kurbelwellenachse - ausgebildet ist. Die Anregevorrichtung ist in einer der Induktionseinrichtung zugewandten Flanke einer der Pleuelstange benachbarten Kurbelwange der Kurbelwelle angeordnet.

In einer Ausführungsvariante der Erfindung ist vorgesehen, dass die Induktionseinrichtung eine um einen Kern aus magnetisch leitendem Material angeordnete Spulenvorrichtung aufweist, wobei vorzugsweise Kern und Spulenvorrichtung verliersicher in der Ausnehmung angeordnet sind. Bei dem magnetisch leitenden Material kann es sich beispielsweise um Ferrit, Weicheisen oder einen Permanentmagneten bzw. permanentmagnetisches Material wie Stahl, Aluminium-Nickel-Cobalt-Magnete oder Seltenerdmagnete (Neodym-Eisen-Bor oder Samarium-Cobalt) handeln. Das verliersichere Anordnen kann beispielsweise durch Einkleben, Verschrauben, lösbare Klickverbindungen oder ähnliches erfolgen.

Die aus Spulenvorrichtung und Kern bestehende Induktionseinrichtung kann direkt in die seitliche Ausnehmung der Pleuelstange eingesetzt sein, wobei die Ausnehmung in einem Lagerdeckel eines Pleuellagers angeordnet sein kann. Alternativ dazu kann die Induktionseinrichtung auch in einem in die Ausnehmung eingesetzten, auf Seiten der Stirnseite der Pleuelstange offen ausgeführten Gehäuse angeordnet sein. Das Gehäuse kann dabei beispielsweise napfförmig ausgeführt sein und samt der Induktionseinrichtung in die Ausnehmung eingesetzt und verliersicher fixiert werden.

Um die Entstehung von Wirbelströmen im Pleuellagerdeckel zu verhindern bzw. zu verringern besteht zumindest ein der Ausnehmung benachbarter Bereich der Pleuelstange bzw. des Pleuellagerdeckels aus einem Material mit einer bestimmten elektrischen Leitfähigkeit σ und/oder aus einem Material mit einer Permeabilitätszahl µᵣ von mindestens 1000 (günstigerweise zwischen 1000 und 3000) und/oder weist eine magnetfeldhemmende Beschichtung mit einer Permeabiltätszahl µᵣ von maximal 140 000 (günstigerweise zwischen 50 000 und 140 000) auf. Der Pleuellagerdeckel oder zumindest der Bereich der Pleuelstange um die Induktionseinrichtung(en) wird also aus magnetisch gut leitfähigem, aber elektrisch schlecht leitendem Material gefertigt. Dadurch wird ein Eindringen der Magnetfeldlinien in den Pleuellagerdeckel und damit die Entstehung von Wirbelströmen verhindert, die zu Wärmeentwicklung in der Pleuelstange und damit Verringerung des Wirkungsgrades führen würden.

Vorzugsweise weist die Anregevorrichtung zumindest ein fest mit der Kurbelwelle verbundenes Magnetelement, vorzugsweise ein Permanentmagnetelement auf, das im Kurbelzapfenabstand von der Längsachse des Kurbelzapfens entfernt angeordnet ist. Dabei kann die Anregevorrichtung auch mehrere fest mit der Kurbelwelle verbundene Magnetelemente aufweisen, die in radialer Richtung im Kurbelzapfenabstand von der Längsachse des Kurbelzapfens entfernt angeordnet sind, wobei vorzugsweise jeweils zwei benachbarte Magnetelemente auf Seiten der Stirnseite der Pleuelstange unterschiedliche magnetische Polungen aufweisen. Durch Rotation der Kurbelwelle wird damit ein veränderlicher magnetischer Fluss in der Induktionsvorrichtung erzeugt und eine Spannung induziert. Alternativ zu mehreren Magnetelementen kann die Anregevorrichtung durch ein mit einer kurbelzapfenseitigen Flanke einer Kurbelwange der Kurbelwelle fest verbundenes oder einstückig ausgeführtes, die Längsachse des Kurbelzapfens zumindest teilweise umgebendes Ringelement ausgebildet sein.

Das Ringelement kann dabei als zumindest eines der folgenden Gruppe ausgeführt sein: Magnetring mit einem Radius zumindest gleich dem Kurbelzapfenabstand, wobei vorzugsweise zumindest zwei benachbarte, in Richtung der Stirnseite der Pleuelstange orientierte Polsegmente eine unterschiedliche magnetische Polung aufweisen; Segmentring mit einem Radius zumindest gleich dem Kurbelzapfenabstand mit zumindest einer Vertiefung und zumindest einer dazu benachbarten Erhebung, wobei die Vertiefung und Erhebung in radialer Richtung verlaufend definiert sind; Zahnring mit einem Radius zumindest gleich dem Kurbelzapfenabstand mit zumindest einer Vertiefung und zumindest einer dazu benachbarten Erhebung, wobei die Vertiefung und Erhebung in axialer Richtung parallel zur Längsachse des Kurbelzapfens verlaufend, der Stirnseite der Pleuelstange zugewandt definiert sind; definierter Welligkeitsbereich mit in radialer Richtung oder Umfangsrichtung abwechselnden Erhöhungen und Vertiefungen, die relativ zu einer normal zur Längsachse des Kurbelzapfens in der kurbelzapfenseitigen Flanke verlaufende Normalebene ausgeführt sind.

Die verschiedenen Varianten des Ringelements bewirken im Fall des Magnetrings ein veränderliches magnetisches Feld, in den übrigen Fällen variiert der Luftspalt zwischen der Induktionseinrichtung und der Anregevorrichtung bei Drehung der Kurbelwelle, wodurch eine Änderung des magnetischen Flusses hervorgerufen wird und somit ein elektrisches Feld entsteht, was eine Spannungsinduktion in der Induktionseinrichtung zu Folge hat.

In einer einfachen Ausführungsvariante der Erfindung ist eine einzige Induktionseinrichtung im Pleuellagerdeckel vorgesehen. Wird höhere elektrische Leistung benötigt, so können auch mehrere, vorzugsweise zwei oder drei, Induktionseinrichtungen im Pleuellagerdeckel angeordnet sein, deren Längsachsen parallel zur Längsachse des Kurbelzapfens angeordnet sind. Die Induktionseinrichtungen sind jeweils zumindest im Kurbelzapfenabstand von der Längsachse des Kurbelzapfens angeordnet.

Im Bereich der Ausnehmungen sind Pleuelstange bzw. Pleuellagerdeckel bevorzugt mit einer größeren Dicke ausgeführt, als im restlichen Bereich des Pleuellagerdeckels und Pleuellagerauges, um einen möglichst geringen Luftspalt zwischen Pleuelstange und Kurbelwange - zur Erzielung einer bestmögliche Wirkung - auszubilden. Der restliche Bereich des großen Pleuelauges hat einen größeren Abstand zur benachbarten Kurbelwange, daher ist die nachteilige Auswirkung durch Wirbelströme in diesen Bereichen etwas geringer. Daher reicht es im Prinzip aus, die oben genannten Maßnahmen im der Ausnehmung benachbarten Bereich der Pleuellagerdeckels vorzusehen, in welchem der Pleuellagerdeckel seine größte Dicke aufweist.

In Weiterführung der Erfindung ist vorgesehen, dass in der Pleuelstange zumindest eine mit der Induktionseinrichtung und dem Steuerventil elektrisch verbundene oder verbindbare Energiespeichereinrichtung angeordnet ist. Mittels der Energiespeichereinrichtung kann die per Induktion generierte Energie gespeichert und bei Bedarf bereitgestellt werden. Als Energiespeichereinheit kann beispielsweise eine Batterie, ein Akku, ein Supercap oder ähnliches verwendet werden. Damit können die Schaltfunktionen eines beispielsweise bistabilen Steuerventils zum Auf- oder Zusteuern der Kanäle in der Pleuelstange sichergestellt werden.

Die erfindungsgemäßen Ausführungsvarianten haben alle den Vorteil, dass sie konstruktiv und herstellungsmäßig einfach und platzsparend ausgeführt sind und auf zuverlässige Weise eine flexible Veränderung des Verdichtungsverhältnisses ermöglichen. Je nach Umdrehungszahl der Brennkraftmaschine und der Kurbelwelle können Leistungen zwischen 1W und bis zu 5W (bei ca. 3000 U/min) bereitgestellt werden, die ein zuverlässiges Schalten des Steuerventils ermöglichen.

Die Erfindung wird im Folgenden anhand von nicht einschränkenden Ausführungsbeispielen, die in den Figuren dargestellt sind, näher erläutert. Darin zeigen schematisch:
Fig. 1 eine Pleuelstange einer erfindungsgemäßen Hubkolbenmaschine samt angedeutetem Steuerventil in einer ersten Ausführungsform in einer Seitenansicht,
Fig. 2 eine weitere Pleuelstange gemäß der ersten Ausführungsform in einer Seitenansicht,
Fig. 3 die Pleuelstange aus Fig. 2 in einem Schnitt entlang der Linie III - III in Fig. 2,
Fig. 4 die Pleuelstange aus Fig. 2 samt Kurbelwelle und Anregevorrichtung in einer Seitenansicht,
Fig. 5 die Pleuelstange aus Fig. 4 in einem Schnitt entlang der Linie V - V in Fig. 4,
Fig. 6 eine Pleuelstange einer erfindungsgemäßen Hubkolbenmaschine in einer zweiten Ausführungsform in einer Seitenansicht,
Fig. 7 die Pleuelstange aus Fig. 6 in einer Frontansicht,
Fig. 8 die Pleuelstange aus Fig. 6 in einem Schnitt entlang der Linie VIII - VIII in Fig. 6,
Fig. 9 die Pleuelstange aus Fig. 6 samt ausschnittsweiser Kurbelwelle und Anregevorrichtung in einer Seitenansicht,
Fig. 10 die Pleuelstange aus Fig. 9 in einer Frontansicht,
Fig. 11 die Pleuelstange aus Fig. 9 in einem Schnitt entlang der Linie XI - XI in Fig. 9,
Fig. 12 eine Pleuelstange samt Kurbelwelle in einer Variante in einem Schnitt analog zu Fig. 5,
Fig. 13 eine Pleuelstange samt Kurbelwelle in einer weiteren Variante in einem Schnitt analog zu Fig. 5,
Fig. 14 einen Pleuellagerdeckel sowie eine Anregevorrichtung einer erfindungsgemäßen Hubkolbenmaschine in einer dritten Ausführungsform der Erfindung in einer Seitenansicht,
Fig. 15 den Pleuellagerdeckel samt Anregevorrichtung in einem Schnitt entlang der Linie XV - XV in Fig. 14,
Fig. 16 den Pleuellagerdeckel samt Anregevorrichtung in einem Schnitt entlang der Linie XVI - XVI in Fig. 14,
Fig. 17 den Pleuellagerdeckel samt Anregevorrichtung in einer Frontansicht,
Fig. 18 den Pleuellagerdeckel samt Anregevorrichtung aus Fig. 14 in einer perspektivischen Schrägansicht,
Fig. 19 einen Polschuh der Induktionseinrichtung des in Fig. 18 dargestellten Pleuellagerdeckels in einer perspektivischen Schrägansicht,
Fig. 20 diesen Polschuh in einer Horizontalschnittansicht, und
Fig. 21 eine Induktionseinrichtung einer Pleuelstange einer erfindungsgemäßen Hubkolbenmaschine in einer vierten erfindungsgemäßen Ausführungsvariante in einem Längsschnitt.

Funktionsgleiche Teile sind in den Darstellungen der Ausführungsvarianten mit gleichen Bezugszeichen versehen.

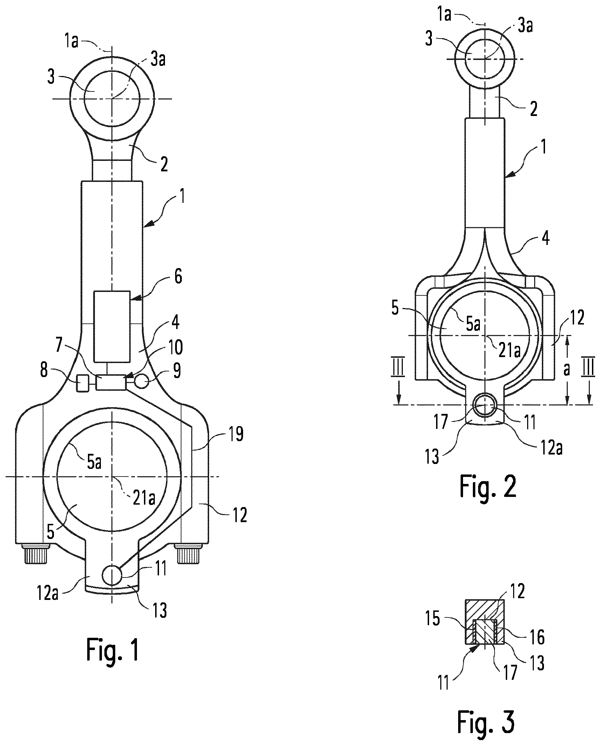

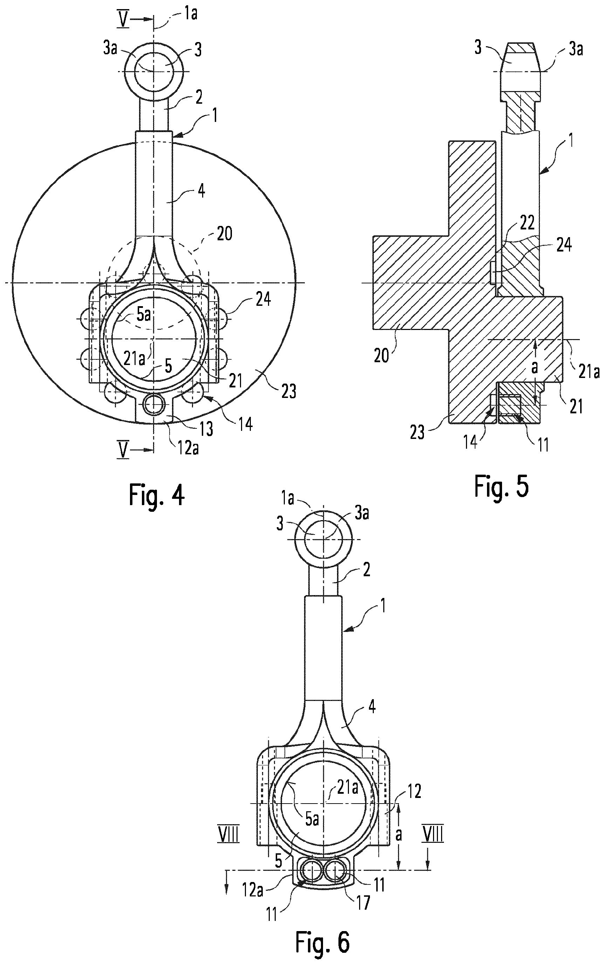

Die Figuren zeigen jeweils eine zweigeteilte Pleuelstange 1 einer Hubkolbenmaschine, insbesondere einer Brennkraftmaschine, mit einem oberen ersten Stangenteil 2 mit dem kleinen Pleuelauge 3 zur Verbindung mit einem nicht weiter dargestellten Kolben und einem unteren zweiten Stangenteil 4 mit dem ein Pleuellager 5a ausbildenden großen Pleuelauge 5 zur Verbindung mit einer beispielsweise aus Fign. 5, 12 oder 13 ersichtlichen Kurbelwelle 20. Mit Bezugszeichen 3a ist eine mit einer nicht dargestellten Kolbenbolzenachse zusammenfallende Drehsymmetrieachse des kleinen Pleuelauges 3 bezeichnet. Der erste Stangenteil 2 ist gegenüber dem zweiten Stangenteil 4 zwischen einer ausgezogenen Lage und einer eingeschobenen Lage um einen durch einen nicht weiter ersichtlichen Endanschlag begrenzten Verstellbereich in Richtung der Längsachse 1a der Pleuelstange 1 verstellbar. Dazu ist eine in Fig. 1 dargestellte Längenverstellvorrichtung 6 vorgesehen, die beliebig, wie beispielsweise in der AT 514 071 B der Anmelderin beschrieben, ausgeführt sein kann.

Die Längenverstellung kann also wie in der AT 514 071 B gezeigt mittels eines im oberen ersten Stangenteil 2 befestigten Kolbenelements erfolgen, welches in einem Führungszylinder des unteren zweiten Stangenteils 4 der Pleuelstange 1 axial (in Richtung der Längsachse 1a der Pleuelstange 1) verschiebbar geführt ist, wobei zwischen einer dem großen Pleuelauge 5 zugewandten ersten Stirnfläche des Kolbenelementes und dem zweiten Stangenteil 4 bzw. dem Führungszylinder ein Hochdruckraum aufgespannt wird, welcher über einen Ölkanal mit einem als Umschaltventil ausgeführten Steuerventil 7 verbunden ist, welches wahlweise den Hochdruckraum mit Öldruck beaufschlagen kann. Fig. 1 zeigt also eine mittels einer Längenverstellvorrichtung 6 und einem Steuerventil 7 längenverstellbare Pleuelstange 1. Die Längenverstellvorrichtung 6 kann auf verschiedene Arten ausgeführt sein und ist nicht Teil der Erfindung.

Zur Steuerung des Steuerventils 7 - also zur selektiven Beaufschlagung des Hochdruckraums mit Öldruck, bzw. zur jeweils anderen Betätigung der Längenverstellvorrichtung 6 - ist eine Steuerungseinheit 8 vorgesehen, die beispielsweise über eine im Kurbelgehäuse angeordnete, in den Figuren nicht dargestellte Sende-/Empfangseinheit Steuersignale erhält. Das Steuerventil 7 bildet eine strombetätigte Einrichtung 10 der Pleuelstange 1. Mit Bezugszeichen 9 ist eine in der Pleuelstange 1 angeordnete Energiespeichereinrichtung bezeichnet, welche mit der Steuereinheit 8 verbunden ist. Bei der Energiespeichereinrichtung 9 kann es sich beispielsweise um eine Batterie, einen Akku, einen Supercap (also einen Super- bzw. Ultrakondensator zur Speicherung elektrischer Energie) oder ähnliches handeln.

Das Steuerventil 7 ist über eine elektrische Leitung 19 mit zumindest einer Induktionseinrichtung 11 elektrisch verbunden bzw. verbindbar, welche im Bereich des großen Pleuelauges 5 der Pleuelstange 1, bzw. im Pleuelfuß oder im Fußbereich 12a des Pleuellagerdeckels 12 angeordnet ist. In der Induktionseinrichtung 11 kann in zumindest einer Stellung der Pleuelstange 1 bzw. bei einer Drehbewegung der Kurbelwelle 20 mittels zumindest einer kurbelwellenfesten Anregevorrichtung 14 ein elektrischer Strom induzierbar werden. Die Induktionseinrichtung 11 weist zumindest eine Spulenvorrichtung 15 auf und ist in einer von zumindest einer Stirnseite 13 der Pleuelstange 1 ausgehenden Ausnehmung 16 der Pleuelstange 1 bzw. des Pleuellagerdeckels 12 des Pleuellagers 5a angeordnet, welche Ausnehmung 16 von einer Längsachse 21a des Kurbelzapfens 21 der Kurbelwelle 20 in einem Kurbelzapfenabstand a (Achsabstand) entfernt angeordnet ist. Grundsätzlich können auch zwei oder mehr Induktionseinrichtungen 11 vorgesehen sein, die jeweils im Kurbelzapfenabstand a angeordnet sind. Der Kurbelzapfenabstand a wird dabei als Abstand zwischen der Längsachse 21a und dem Mittelpunkt der Ausnehmung 16 in radialer Richtung angenommen.

Die Anregevorrichtung 14 ist auf oder in zumindest einer kurbelzapfenseitigen Flanke 22 einer Kurbelwange 23 der Kurbelwelle 20 angeordnet und kann auf verschiedene Arten ausgeführt sein, wie weiter unten erläutert wird.

Die Spulenvorrichtung 15 ist z.B. als aufgewickelte Spule leitenden Materials ausgeführt und um einen beispielsweise zylindrischen Kern 17 angeordnet, welcher in der Ausnehmung 16 fest eingesetzt ist (siehe Fig. 2 bis 5, Fig. 13). Der Kern 17 besteht im dargestellten Ausführungsbeispiel aus einem magnetisch leitenden Material wie z.B. Ferrit oder Weicheisen oder aus einem Permanentmagneten bzw. permanentmagnetischem Material wie Stahl, Aluminium-Nickel-Cobalt-Magneten oder Seltenerdmagneten (z.B. Neodym-Eisen-Bor, Samarium-Cobalt oder andere). Der Durchmesser des Kerns 17 beträgt dabei ungefähr 80 Prozent des Außendurchmessers der ihn umgebenden Spulenvorrichtung 15. Während die zumindest eine elektrische Leitung 19 von der Induktionseinrichtung 11 zum Steuerventil 7 führt, kann eine zweite, nicht dargestellte Leitung auf Masse gelegt werden, wobei die Pleuelstange 1 als Bezugspotential herangezogen werden kann.

Um ein unbeabsichtigtes Lösen der Induktionseinrichtung 11 zu vermeiden kann sie in die Ausnehmung 16 eingeklebt, eingepresst oder eingeschraubt oder auf andere Arten verliersicher angeordnet sein. Der von der Spulenvorrichtung 15 umgebene Kern 17 kann dabei direkt in die Ausnehmung eingesetzt sein. Alternativ dazu ist es auch möglich, Kern 17 samt Spulenvorrichtung 15 in ein auf Seiten der Stirnseite 13 der Pleuelstange 1 offen ausgeführtes Gehäuse 18, das ein "napfförmiges" Aussehen hat, als Baueinheit vorzuinstallieren und diese Baueinheit als Ganzes in die Ausnehmung 16 verliersicher einzusetzen.

Bei einer ersten Variante der dargestellten Ausführungsformen weist die kurbelwellenfeste Anregevorrichtung 14 zumindest ein fest mit der Kurbelwelle 20 verbundenes Magnetelement 24, beispielsweise Permanentmagnete, auf, welches im Kurbelzapfenabstand a von der Längsachse 21a des Kurbelzapfens 21 entfernt angeordnet ist. Dabei weist der Mittelpunkt bzw. das Zentrum des Magnetelements 24 den Kurbelzapfenabstand a von der Längsachse 21a des Kurbelzapfens 21 auf. Die Anregevorrichtung 14 kann dabei durch ein oder mehrere einzelne als Permanentmagnete ausgeführte Magnetelemente 24 gebildet sein.

Im Falle von mehreren (beispielsweise zehn, siehe Fig. 4) ringförmig um die Längsachse 21a des Kurbelzapfens 21 angeordneten einzelnen, als Permanentmagnete ausgeführten Magnetelementen 24 weisen benachbarte Permanentmagnete auf Seiten der Stirnseite 13 der Pleuelstange 1 jeweils unterschiedliche magnetische Polungen auf.

Bei Rotation der Kurbelwelle 20 während dem Betrieb der Hubkolben- bzw. Brennkraftmaschine bewegen sich die Magnetelemente 24 an den magnetisch leitenden Kernen 17 vorbei und durch den sich ändernden magnetischen Fluss wird in den Induktionseinrichtungen 11 eine Spannung induziert, die zum Betrieb des Steuerventils 7 verwendet werden kann.

Um den Wirkungsgrad der Vorrichtung zu erhöhen, können gemäß einer Variante der Erfindung Maßnahmen ergriffen werden, die die Induzierung von Wirbelströmen in der Pleuelstange reduzieren bzw. verhindern sollen. Dazu ist vorgesehen, dass die Pleuelstange 1 und/oder der Pleueldeckel 12 zumindest in zu den Ausnehmungen 16 benachbarten Bereichen (dabei kann es sich z.B. auch um das napfförmige Gehäuse 18 handeln), günstigerweise aber vollständig in von der Anregevorrichtung 14 überstrichenen Bereichen aus einem Material mit einer bestimmten elektrischen Leitfähigkeit σ (unter Berücksichtigung der notwendigen Abstimmung zwischen magnetischer und elektrischer Leitfähigkeit, die je nach Material um mehrere Zehnerpotenzen schwanken können) und/oder aus einem Material mit einer Permeabilitätszahl µᵣ von mindestens 1000 bis 3000 besteht und/oder eine magnetfeldlinienhemmende Oberflächenbeschichtung mit einer Permeabiltätszahl µᵣ von maximal 50 000 bis 140 000 aufweist. Durch derartige Materialien wie z.B. Ferrit oder andere gesinterte Werkstoffe, die gut magnetisch, aber schlecht elektrisch leitend sind wird das Fließen von Strömen in der Pleuelstange 1 und damit Wärmeverluste durch Wirbelströme verhindert. Das Beschichten mit magnetfeldlinienhemmenden Materialien wie Mu-Metall verhindert das Eindringen von Magnetfeldlinien und Induzieren von Wirbelströmen.

Die Ausdehnung der den Ausnehmungen 16 benachbarten Bereichen ist von verschiedenen Merkmalen abhängig, beispielsweise von der Wahl der verwendeten Magneten/magnetisch leitenden Materialien, der Polteilung, der Ausnehmungstiefe M1 (siehe Fig. 5), der magnetischen Leitfähigkeit des Materials der Pleuelstange 1 und anderen. Günstigerweise wird eine Umgebung der Ausnehmung 16 wie oben beschrieben ausgeführt, deren Maß (im Fall einer runden Ausnehmung 16 als radiale Erstreckung vom Ausnehmungsrand 16 zu verstehen) einem Quotienten aus der Luftspaltbreite M2 durch die Ausnehmungstiefe M1 entspricht.

Alternativ zu den als einzelne Permanentmagnete ausgeführten Magnetelementen 24 kann auch ein konzentrisch zur Längsachse 21a des Kurbelzapfens 21 angeordnetes, die Längsachse 21a des Kurbelzapfens 21 zumindest teilweise umgebendes Ringelement 25, 26, 27 verwendet werden, welches in oder auf der Flanke 22 der Kurbelwange 23 der Kurbelwelle 20 befestigt ist und mit dieser verbunden oder einstückig ausgeführt ist.

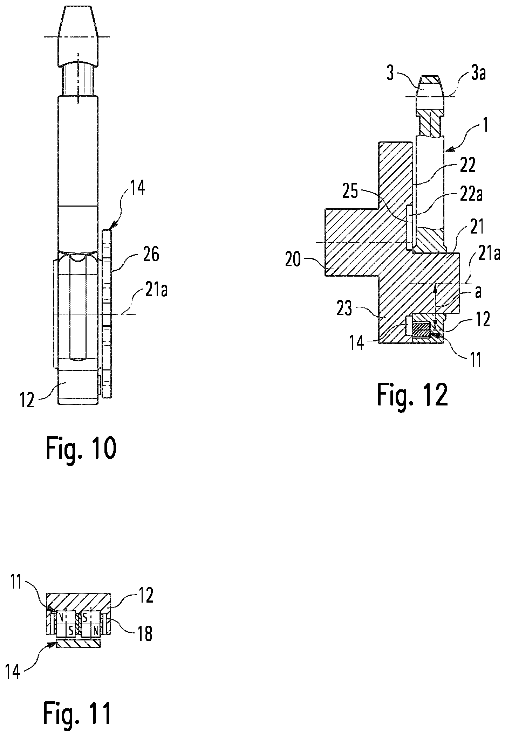

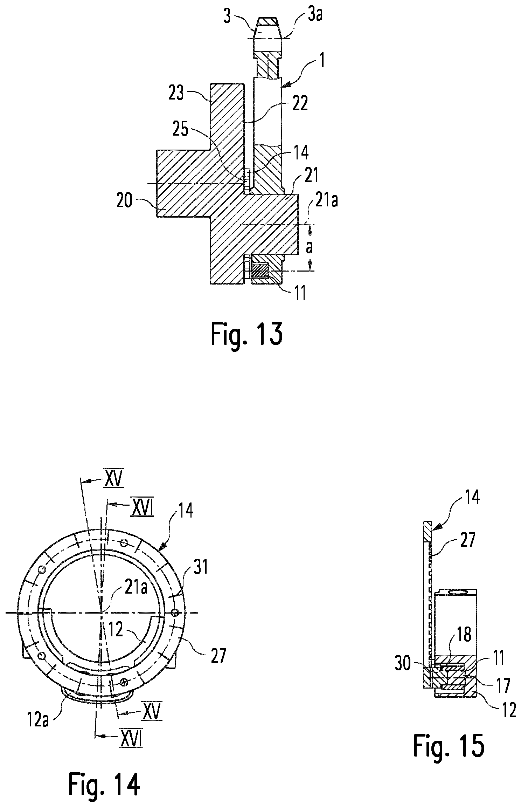

Der Abstand der einzelnen Magnetelemente 24 bzw. der Radius des Ringelements 25 sind dabei gleich dem Kurbelzapfenabstand a von der Längsachse 21a, sind also gleich weit von der Längsachse 21a entfernt wie die Induktionseinrichtung 11. Das Ringelement 25, 26, 27 kann in einer eingefrästen oder erodierten Nut 22a (Fig. 12) der Flanke 22 der Kurbelwange 23 angeordnet sein oder auf der Flanke 22 befestigt sein (Fig. 13).

Eine erste Variante eines Ringelements ist in den Fign. 12 und 13 dargestellt. Das Ringelement ist hier als Magnetring 25 mit einem (durchschnittlichen) Radius gleich dem Kurbelzapfenabstand a ausgeführt, wobei der Magnetring 25 in oder an einer der Stirnseite 13 der Pleuelstange 1 zugewandten Flanke 22 der Kurbelwange 23 angeordnet ist. Der Magnetring 25 besteht aus Polsegmenten eines magnetischen Materials, wobei jeweils zwei benachbarte Polsegmente in Richtung der Stirnseite 13 der Pleuelstange 1 orientiert unterschiedliche magnetische Polungen aufweisen.

Bei Drehung der Kurbelwelle 20 wird durch die Magnetelemente 24 bzw. den Magnetring 25 in Induktionseinrichtungen 11 der Pleuelstange 1 eine elektrische Spannung induziert, welche zur Stromversorgung des Steuerventils 7 oder zur Speisung der Energiespeichereinheit 9 verwendet werden kann.

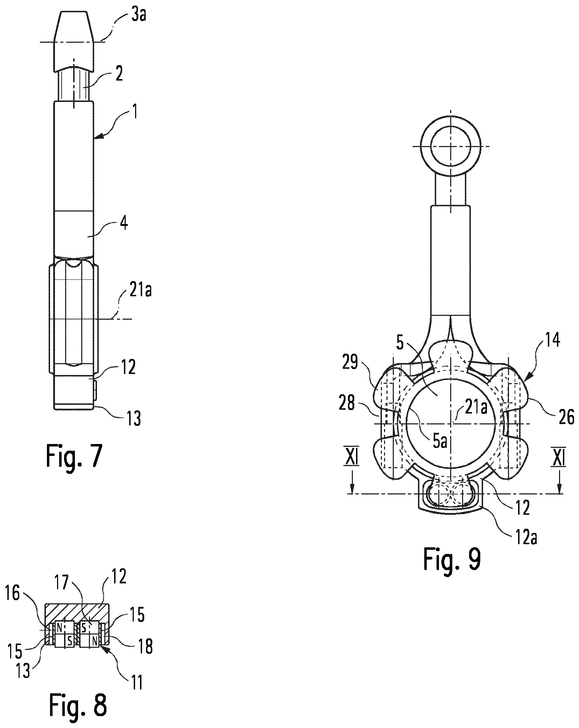

Eine weitere Variante des Ringelements ist in den Fign. 9 bis 11 bzw. 15 bis 20 dargestellt, wo die Anregevorrichtung 14 durch einen mit der kurbelzapfenseitigen Flanke 22 der Kurbelwange 23 der Kurbelwelle 20 fest verbundenen Segmentring 26 (Fign. 9-11) oder Zahnring 27 (Fign. 15-20) mit zumindest einer definierten axialen Freistellung oder Vertiefung 28 und zumindest einer definierten axialen Erhebung 29 gebildet ist, wobei die Freistellungen bzw. Vertiefungen 28 und Erhebungen 29 zumindest im Kurbelzapfenabstand a von der Längsachse 21a des Kurbelzapfens 21 entfernt angeordnet sind. In diesen Varianten sind die Kerne 17 der Induktionseinrichtungen 11 als Permanentmagnete bzw. aus permanentmagnetischen Materialien gefertigt.

Der Segmentring 26 weist gemäß Fig. 9 nebeneinander angeordnete Vertiefungen 28 und Erhebungen 29 auf, die in radialer Richtung verlaufen - das bedeutet, der Radius des Segmentrings 26 ist im Bereich der Erhebung 29 größer als im Bereich der Vertiefung 28, wobei der mittlere Radius in etwa dem Kurbelzapfenabstand a entspricht. Damit ist die radiale Erstreckung des Segmentrings 26 im Bereich der Erhebung 29 größer als der Kurbelzapfenabstand, im Bereich der Vertiefung 28 kleiner. Dadurch wird erreicht, dass bei Drehung der Kurbelwelle 20 die Induktionseinrichtungen 11 in der Pleuelstange 1 vom Segmentring 26 nur im Bereich von dessen Erhebungen 29 überstrichen werden, der Segmentring 26 im Bereich der Vertiefungen 28 die Induktionseinrichtungen 11 aber nicht überlappt.

Bei Drehbewegungen der Kurbelwelle 20 ändert sich daher der magnetische Fluss in den Induktionseinrichtungen 11, wodurch eine Spannung in den Spulenvorrichtungen 15 induziert wird, der zum Betrieb des Steuerventils 7 verwendet werden kann.

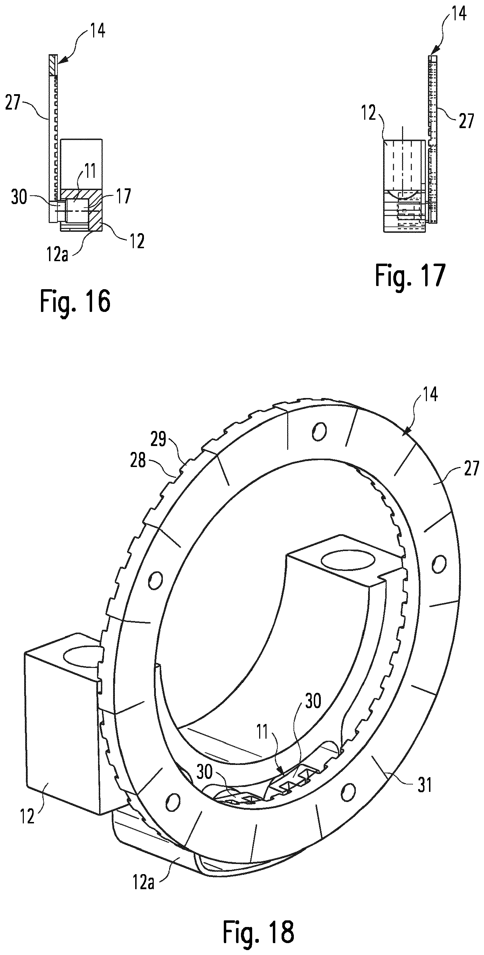

Der Zahnring 27 - insbesondere gemäß den Fign. 15, 16 und 18 - weist Vertiefungen 28 und Erhebungen 29 in axialer Richtung, also parallel zur Längsachse 21a des Kurbelzapfens 21, auf. Die Vertiefungen 28 und Erhebungen 29 sind dabei auf der der Stirnseite 13 der Pleuelstange 1 zugewandten Seite des Zahnrings 27 ausgeführt und bilden eine "Zahnung". Durch die Zahnung wird bei Drehung der Kurbelwelle 20 in den Induktionseinrichtungen 11 ebenfalls ein wechselnder magnetischer Fluss bewirkt, der eine Spannung induziert. Wie in den Fig. 14 und 18 dargestellt ist, weist der Zahnring 27 zur Reduktion der während des Betriebs auftretenden Wirbelströme radiale Schlitze 31 auf. Dadurch wird verhindert, dass es zu Wärmebildung im Zahnring 27 aufgrund der Wirbelströme kommt.

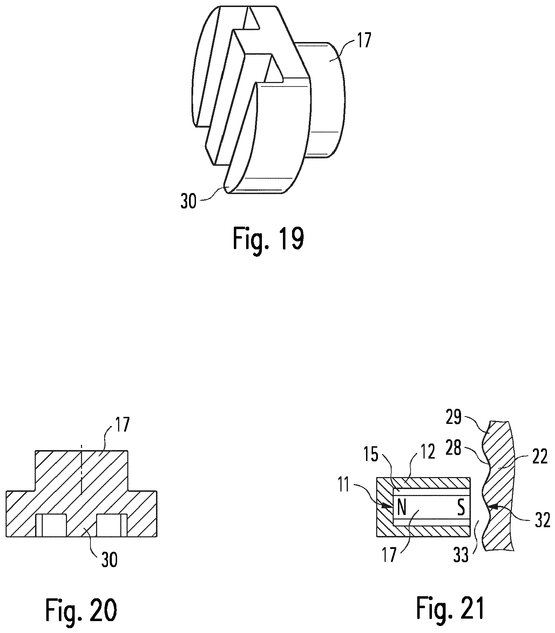

In einer weiteren Variante des Ringelements ist die Anregevorrichtung 14 durch einen definierten Welligkeitsbereich 32 in der kurbelzapfenseitigen Flanke 22 der Kurbelwange 23 mit einander abwechselnden, relativ zu einer normal zur Längsachse 21a des Kurbelzapfens 21 verlaufenden Normalebene ausgeführten Vertiefungen 28 und Erhebungen 29 gebildet, wie Fig. 21 zeigt. Die Erhebungen 29 und Vertiefungen 28 können einander dabei in radialer Richtung oder Umfangsrichtung abwechseln. Durch das Vorbeistreichen der Induktionseinrichtung(en) 11 während des Betriebs bzw. Drehens der Kurbelwelle 20 entsteht ein sich änderndes magnetisches Feld das in den mit als Permanentmagnete oder aus permanentenmagnetischen Materialien ausgeführten Kernen 17 versehenen Induktionseinrichtungen 11 eine Spannung induziert.

In einer weiteren Variante der Erfindung können die Kerne 17 der Induktionseinrichtung 11 gezahnte Polschuhe 30 aufweisen, wie in Fig. 19 und 20 gezeigt ist. Die gezahnten Polschuhe 30 auf den Permanentmagneten der Kerne 17 sind ähnlich dem Zahnring 27 ausgeführt und dienen zur Erhöhung der Änderungsrate des magnetischen Flusses und damit der übertragenen Leistung.

Bei einer Drehbewegung der Kurbelwelle 20 wird durch den variablen Luftspalt in Form der Vertiefungen 28 und Erhebungen 29 der magnetische Fluss der Permanentmagnete bzw. magnetisch leitenden Materialien des oder der Kerne 17 verändert, wodurch eine Spannung in der Spulenvorrichtung 15 induziert wird. Die Änderung des magnetischen Flusses erfolgt somit durch den variablen Luftspalt 33 zwischen der Induktionseinrichtung 11 und der Anregevorrichtung 14.

Wie oben beschrieben sind also in den Varianten der Fig. 4 (Anregevorrichtung 14 in Form von in der Kurbelwange 22 angeordneten Magnetelementen 24, die als Permanentmagnete ausgeführt sind) und der Fign. 12 und 13 (Ringelement als Magnetring 25 mit abwechselnden Polsegmenten) die Kerne 17 der Induktionseinrichtungen 11 aus magnetisch leitendem Material gefertigt während in den übrigen Varianten die Kerne 17 als Permanentmagnete bzw. aus permanentmagnetischen Materialien ausgeführt sind.

Durch die erfindungsgemäße Lösung in ihren beschriebenen Varianten kann über die Induktionseinrichtungen 11 im Leerlauf der Kurbelwelle 20 (ca. 700 U/min) eine Leistung von ca. 1W (Effektivwert) erzielt werden, die sich bei höheren Umdrehungen (z.B. ca. 3000 U/min) auf bis zu 5W steigern lässt. Damit ist eine verlässliche Schaltung des Steuerventils 7 gut umzusetzen. Des Weiteren lässt sich auch die Energiespeichereinrichtung 9 ausreichend mit Energie versorgen, um zu Zeitpunkten geringerer Drehzahlen ein Schalten zu ermöglichen.

## Patentansprüche

1. Hubkolbenmaschine mit zumindest einer mit einem Kurbelzapfen (21) einer Kurbelwelle (26) verbundenen längenverstellbaren Pleuelstange (1), wobei die Pleuelstange (1) zumindest eine Längenverstelleinrichtung (6) aufweist,
charakterisiert dadurch, dass
die Pleuelstange (1) zumindest ein Steuerventil (7) aufweist, wobei die Pleuelstange (1) zumindest eine Induktionseinrichtung (11) aufweist, die in einer in der Pleuelstange (1) ausgeführten, von zumindest einer Stirnseite (13) der Pleuelstange (1) ausgehenden und von einer Längsachse (21a) des Kurbelzapfens (21) in einem Kurbelzapfenabstand (a) entfernt angeordneten Position im Bereich eines großen Pleuelauges (5) der Pleuelstange (1) angeordnet ist, wobei die Induktionseinrichtung (11) mit dem Steuerventil (7) elektrisch verbindbar oder verbunden ist und in der Induktionseinrichtung (11) bei einer Drehbewegung der Kurbelwelle (20) mittels zumindest einer kurbelwellenfesten Anregevorrichtung (14) ein elektrischer Strom induzierbar ist.

2. Hubkolbenmaschine nach Anspruch 1, wobei die Induktionseinrichtung (11) in einer Ausnehmung (16) angeordnet ist.

3. Hubkolbenmaschine nach Anspruch 1 oder 2, **dadurch gekennzeichnet, dass** die Induktionseinrichtung (11) eine um einen Kern (17) aus magnetisch leitendem Material angeordnete Spulenvorrichtung (15) aufweist.

4. Hubkolbenmaschine nach einem der vorhergehenden Ansprüche, **dadurch gekennzeichnet, dass** zumindest eine Induktionseinrichtung (11) in einem in eine Ausnehmung (16) eingesetzten, auf Seiten der Stirnseite (13) der Pleuelstange (1) offen ausgeführten Gehäuse (18) angeordnet ist.

5. Hubkolbenmaschine nach einem der vorhergehenden Ansprüche, **dadurch gekennzeichnet, dass** zumindest ein der Induktionseinrichtung (11) und/oder einer Ausnehmung (16) benachbarter Bereich der Pleuelstange (1) aus einem Material mit einer Permeabilitätszahl µᵣ von mindestens 1000 besteht und/oder eine magnetfeldlinienhemmende Oberflächenbeschichtung mit einer Permeabiltätszahl µᵣ von maximal 140 000 aufweist.

6. Hubkolbenmaschine nach einem der vorhergehenden Ansprüche, **dadurch gekennzeichnet, dass** die Induktionseinrichtung (11) und/oder eine Ausnehmung (16) in einem Lagerdeckel (17) eines Pleuellagers (5a) angeordnet ist.

7. Hubkolbenmaschine nach einem der vorhergehenden Ansprüche, **dadurch gekennzeichnet, dass** die Anregevorrichtung (14) zumindest ein fest mit der Kurbelwelle (20) verbundenes Magnetelement (24) aufweist, das im Kurbelzapfenabstand (a) von der Längsachse (21a) des Kurbelzapfens (21) entfernt angeordnet ist.

8. Hubkolbenmaschine nach einem der vorhergehenden Ansprüche, **dadurch gekennzeichnet, dass** die Anregevorrichtung (14) mehrere fest mit der Kurbelwelle (20) verbundene Magnetelemente (24) aufweist, die in radialer Richtung im Kurbelzapfenabstand (a) von der Längsachse (21a) des Kurbelzapfens (21) entfernt angeordnet sind,.

9. Hubkolbenmaschine nach einem der vorhergehenden Ansprüche, **dadurch gekennzeichnet, dass** die Anregevorrichtung (14) durch ein mit der kurbelzapfenseitigen Flanke (22) einer Kurbelwange (23) der Kurbelwelle (20) fest verbundenes oder einstückig ausgeführtes, die Längsachse (21a) des Kurbelzapfens (21) zumindest teilweise umgebendes Ringelement (25, 26, 27) gebildet ist.

10. Hubkolbenmaschine nach Anspruch 9, **dadurch gekennzeichnet, dass** das Ringelement (25, 26, 27) als zumindest eines der folgenden Gruppe ausgeführt ist:
• Magnetring (25) mit einem Radius zumindest gleich dem Kurbelzapfenabstand (a);
• Segmentring (26) mit einem Radius zumindest gleich dem Kurbelzapfenabstand (a) mit zumindest einer Vertiefung (28) und zumindest einer dazu benachbarten Erhebung (29), wobei die Vertiefung (28) und Erhebung (29) in radialer Richtung verlaufend orientiert sind;
• Zahnring (27) mit einem Radius zumindest gleich dem Kurbelzapfenabstand (a) mit zumindest einer Vertiefung (28) und zumindest einer dazu benachbarten Erhebung (29), wobei die Vertiefung (28) und Erhebung (29) in axialer Richtung parallel zur Längsachse (21a) des Kurbelzapfens (21) verlaufend, der Stirnseite (13) der Pleuelstange (1) zugewandt definiert sind;
• Definierter Welligkeitsbereich (32) mit in radialer Richtung oder Umfangsrichtung abwechselnden Erhöhungen und Vertiefungen, die relativ zu einer normal zur Längsachse (21a) des Kurbelzapfens (21) in der kurbelzapfenseitigen Flanke (22) verlaufende Normalebenen ausgeführt sind.

11. Hubkolbenmaschine nach einem der Ansprüche 1 bis 10, **dadurch gekennzeichnet, dass** in der Pleuelstange (1) zumindest eine mit der Induktionseinrichtung (11) und dem Steuerventil (7) elektrisch verbundene oder verbindbare Energiespeichereinrichtung (9) angeordnet ist.

12. Hubkolbenmaschine nach Anspruch 3, **dadurch gekennzeichnet, dass** Kern (17) und Spulenvorrichtung (15) verliersicher in einer Ausnehmung (16) angeordnet sind.

13. Hubkolbenmaschine nach Anspruch 7, **dadurch gekennzeichnet, dass** das Magnetelement (24) ein Permanentmagnetelement ist.

## Claims

1. A reciprocating piston machine comprising at least one length adjustable connecting rod (1) connected to a crankpin (21) of a crankshaft (26), wherein the connecting rod (1), comprises at least one length adjustment device (6) **characterized in that** the connecting rod (1) comprises at least one control valve (7), wherein the connecting rod (1) comprises at least one induction device (11) arranged in the connecting rod (1) in the region of a large connecting rod eye (5) of the connecting rod (1) at a position extending from at least one end face (13) of the connecting rod (1) and distanced from a longitudinal axis (21a) of the crankpin (21) by a crankpin distance (a), wherein the induction device (11) is or can be electrically connected to the control valve (7) and an electrical current can be induced in the induction device (11) during rotation of the crankshaft (20) by means of at least one exciting apparatus (14) attached to the crankshaft.

2. The reciprocating piston machine according to claim 1, wherein the induction device (11) is arranged in a recess (16).

3. The reciprocating piston machine according to claim 1 or 2, **characterized in that** the induction device (11) comprises a coil apparatus (15) arranged around a core (17) of magnetically conductive material.

4. The reciprocating piston machine according to one of the proceedings claims, **characterized in that** at least one induction device (11) is arranged in an openly designed housing (18) on the side of the end face (13) of the connecting rod (1), the housing (18) being inserted into a recess (16).

5. The reciprocating piston machine according to one of the proceeding claims, **characterized in that** at least one area of the connecting rod (1) adjacent to the induction device (11) and/or a recess (16) consists of a material having a permeability µᵣ of at least 1,000 and/or a magnetic field line inhibiting surface coating having a permeability µᵣ not exceeding 140,000.

6. The reciprocating piston machine according to one of the proceeding claims, **characterized in that** the induction device (11) and/or a recess (16) is arranged in a bearing cap (17) of a connecting rod bearing (5a).

7. The reciprocating piston machine according to one of the proceeding claims, **characterized in that** the exciting apparatus (14) comprises at least one magnet element (24) fixedly connected to the crankshaft (20) disposed at the crankpin distance (a) away from the longitudinal axis (21a) of the crankpin (21).

8. The reciprocating piston machine according to one of the proceeding claims, **characterized in that** the exciting apparatus (14) comprises a plurality of magnet elements (24) fixedly connected to the crankshaft (20) radially disposed at the crankpin distance (a) from the longitudinal axis (21a) of the crankpin (21).

9. The reciprocating piston machine according to one of the proceeding claims, **characterized in that** the exciting apparatus (14) is formed by a ring element (25, 26, 27) fixedly connected to or formed integrally with a crankpin side flank (22) of a crank web (23) of the crankshaft (20) which at least partially surrounds the longitudinal axis (21a) of the crankpin (21).

10. The reciprocating piston machine according to claim 9, **characterized in that** the ring element (25, 26, 27) is realized as at least one of the following groups:
- a magnetic ring (25) with a radius at least equal to the crankpin distance (a);
- a segment ring (26) with a radius at least equal to the crankpin distance (a) having at least one recess (28) and at least one projection (29) adjacent thereto, wherein the recess (28) and projection (29) are oriented along a radially running direction;
- a toothed ring (27) with a radius at least equal to the crankpin distance (a) having at least one recess (28) and at least one projection (29) adjacent thereto, wherein the recess (28) and projection (29) are defined running along the axial direction parallel to the longitudinal axis (21a) of the crankpin (21), and facing the end face (13) of the connecting rod (1);
- a defined rippled area (32) with radially or circumferentially alternating projections and recesses designed running in a normal plane, which is normal to the longitudinal axis (21a) of the crankpin (21) in the crankpin side flank (22).

11. The reciprocating piston machine to one of claims 1 to 10, **characterized in that** at least one energy storage device (9) is arranged in the connecting rod (1) which is or can be electrically connected to the induction device (11) and the control valves (7).

12. The reciprocating piston machine according to claims 3, **characterized in that** the core (17) and the coil apparatus (15) are captively arranged in the recess (16).

13. The reciprocating piston machine according to claim 7, **characterized in that** the magnet element (24) is a permanent magnet element.

## Revendications

1. Moteur à pistons alternatifs avec au moins une bielle (1) ajustable en longueur reliée à un maneton (21) d'un vilebrequin (26), dans lequel la bielle (1) présente au moins un système d'ajustement longitudinal (6),
**caractérisé en ce que**
la bielle (1) présente au moins une soupape de commande (7), dans lequel la bielle (1) présente au moins un système d'induction (11), qui est disposé dans la zone d'un grand œil de tête de bielle (5) de la bielle (1) dans une position réalisée dans la bielle (1), partant d'au moins un côté frontal (13) de la bielle (1) et à distance d'un axe longitudinal (21a) du maneton (21) à une distance du maneton (a), dans lequel le système d'induction (11) peut être relié ou est relié de manière électrique à la soupape de commande (7) et un courant électrique peut être induit dans le système d'induction (11) lors d'un mouvement de rotation du vilebrequin (20) au moyen d'au moins un dispositif d'excitation (14) solidaire du vilebrequin.

2. Moteur à pistons alternatifs selon la revendication 1, dans lequel le système d'induction (11) est disposé dans un évidement (16).

3. Moteur à pistons alternatifs selon la revendication 1 ou 2, **caractérisé en ce que** le système d'induction (11) présente un dispositif de bobine (15) disposé autour d'une parie centrale (17) composée d'un matériau magnétiquement conducteur.

4. Moteur à pistons alternatifs selon l'une quelconque des revendications précédentes, **caractérisé en ce qu'**au moins un système d'induction (11) est disposé dans un boîtier (18) inséré dans un évidement (16), réalisé de manière ouverte sur des côtés du côté frontal (13) de la bielle (1) .

5. Moteur à pistons alternatifs selon l'une quelconque des revendications précédentes, **caractérisé en ce qu'**au moins une zone, adjacente au système d'induction (11) et/ou à un évidement (16), de la bielle (1) est constituée d'un matériau avec un indice de perméabilité µᵣ d'au moins 1000 et/ou présente un revêtement de surface bloquant les lignes de champ magnétique, avec un indice de perméabilité µᵣ de 140 000 au maximum.

6. Moteur à pistons alternatifs selon l'une quelconque des revendications précédentes, **caractérisé en ce que** le système d'induction (11) et/ou un évidement (16) sont disposés dans un couvercle de coussinet (17) d'un coussinet de bielle (5a).

7. Moteur à pistons alternatifs selon l'une quelconque des revendications précédentes, **caractérisé en ce que** le dispositif d'excitation (14) présente au moins un élément magnétique (24) relié de manière solidaire au vilebrequin (20), qui est disposé de manière éloignée à la distance de maneton (a) de l'axe longitudinal (21a) du maneton (21).

8. Moteur à pistons alternatifs selon l'une quelconque des revendications précédentes, **caractérisé en ce que** le dispositif d'excitation (14) présente plusieurs éléments magnétiques (24) reliés de manière solidaire au vilebrequin (20), qui sont disposés de manière éloignée dans la direction radiale à la distance de maneton (a) de l'axe longitudinal (21a) du maneton (21).

9. Moteur à pistons alternatifs selon l'une quelconque des revendications précédentes, **caractérisé en ce que** le dispositif d'excitation (14) est formé par un élément annulaire (25, 26, 27) relié de manière solidaire ou réalisé d'un seul tenant à/avec le flanc (22) côté maneton d'un maneton (23) du vilebrequin (20), entourant au moins en partie l'axe longitudinal (21a) du maneton (21).

10. Moteur à pistons alternatifs selon la revendication 9, **caractérisé en ce que** l'élément annulaire (25, 26, 27) est réalisé sous la forme d'au moins un des groupes suivants :
- bague magnétique (25, 26, 27) avec un rayon au moins égal à la distance de maneton (a) ;
- bague segmentée (26) avec un rayon au moins égal à la distance de maneton (a) avec au moins un renfoncement (28) et au moins une partie surélevée (29) adjacente à celui-ci, dans lequel le renfoncement (28) et la partie surélevée (29) sont orientés de manière à s'étendre dans la direction radiale ;
- bague dentée (27) avec un rayon au moins égal à la distance de maneton (a) avec au moins un renfoncement (28) et au moins une partie surélevée (29) adjacente à celui-ci, dans lequel le renfoncement (28) et la partie surélevée (29) sont définis de manière à s'étendre dans une direction axiale de manière parallèle par rapport à l'axe longitudinal (21a) du maneton (21), de manière tournée vers le côté frontal (13) de la bielle (1) ;
- une zone ondulée (32) définie avec des parties surélevées et des renfoncements en alternance dans la direction radiale ou dans la direction périphérique, qui sont réalisés de manière relative par rapport à un plan normal s'étendant à la normale par rapport à l'axe longitudinal (21a) du maneton (21) dans le flanc (22) côté maneton.

11. Moteur à pistons alternatifs selon l'une quelconque des revendications 1 à 10, **caractérisé en ce qu'**au moins un système de stockage d'énergie (9) relié ou pouvant être relié de manière électrique au système d'induction (11) et à la soupape de commande (7) est disposé dans la bielle (1) .

12. Moteur à pistons alternatifs selon la revendication 3, **caractérisé en ce que** la partie centrale (17) et le dispositif de bobine (15) sont disposés de manière imperdable dans un évidement (16).

13. Moteur à pistons alternatifs selon la revendication 7, **caractérisé en ce que** l'élément magnétique (24) est un élément magnétique permanent.
